# FASCICULE DE BREVET EUROPEEN

(11) **EP 3 721 118 B1**
(45) Date de publication et mention de la délivrance du brevet: **29.12.2021**
(21) Numéro de dépôt: 18827205.8
(22) Date de dépôt: 29.11.2018
(51) Int. Cl.: F16H 57/08, F16H 1/48

(54) **TRAIN PLANETAIRE**
PLANETENGETRIEBE
PLANETARY GEAR TRAIN

(30) Priorité: 07.12.2017 FR 1761793
(43) Date de publication de la demande: 14.10.2020
(73) Titulaire: Safran Transmission Systems, 92700 Colombes (FR)
(72) Inventeur: SIMON, Adrien, Louis, 77550 Moissy-Cramayel (FR); LEFEBVRE, Simon, Loïc, Clément, 77550 Moissy-Cramayel (FR); ROBINET, Guillaume, Jean, Pierre, 77550 Moissy-Cramayel (FR)
(74) Mandataire: Ernest Gutmann - Yves Plasseraud S.A.S.
(86) Numéro de dépôt international: PCT/FR2018/053043
(87) Numéro de publication internationale: WO 2019/110892

(56) Documents cités:
- EP-A1- 0 658 704
- WO-A1-03/002891
- FR-A1- 2 268 202

## Description

### DOMAINE

La présente invention concerne un train planétaire destiné notamment à une turbomachine, telle par exemple qu'un turboréacteur ou un turbopropulseur d'avion.

### CONTEXTE

Dans le cas d'un turboréacteur, un train planétaire peut notamment permettre de coupler une soufflante et un arbre solidaire du rotor d'un compresseur et/ou d'une turbine. De cette manière, il est possible d'adapter la vitesse de rotation de la soufflante afin qu'elle soit différente de la vitesse de rotation du rotor de la turbine.

Un train planétaire peut également permettre de coupler l'hélice d'un turbopropulseur à un arbre couplé au rotor d'une turbine de façon à pouvoir adapter la vitesse de rotation de l'hélice en fonction des besoins.

L'utilisation d'un tel train planétaire dans une turbomachine est notamment connue du document US 9 038 779. Dans ce document, le train planétaire comporte un planétaire interne, un planétaire externe, des satellites engrenant avec le planétaire interne et avec le planétaire externe, chaque satellite étant monté pivotant autour d'un arbre, et un porte-satellites supportant chaque arbre.

En fonctionnement, un couple important est transmis au travers du train planétaire ce qui peut déformer le porte-satellites et générer un désaxage des satellites par rapport au planétaire interne et au planétaire externe, entrainant une dégradation des performances des engrènements et une usure des dentures. Afin d'éviter un désaxage des satellites en fonctionnement, le document WO 2014/046960 propose de disposer des cales entre les satellites, de façon à reprendre les efforts et garantir que les arbres des satellites soient maintenus parallèles à l'axe du planétaire interne et du planétaire externe.

L'utilisation de cales supplémentaires augmente la complexité, le coût et la masse du train planétaire.

Un autre exemple de train planétaire est connu de FR 2 268 202.

### RESUME DE L'INVENTION

L'invention vise à remédier à cet inconvénient, de manière fiable et peu onéreuse.

A cet effet, l'invention concerne un train planétaire selon la revendication 1.

De cette manière, il existe un espace annulaire entre la partie cylindrique radialement interne et la partie cylindrique radialement externe. Une telle structure autorise une déformation contrôlée de l'arbre, au niveau du flasque, des parties cylindriques ou de la zone de liaison, de manière à compenser les déformations du porte-satellites. On maintient ainsi de bonnes performances des engrènements entre les satellites et les planétaires tout en évitant une usure prématurée des dentures.

Le porte-satellites peut comporter un premier flanc annulaire s'étendant radialement et un second flanc annulaire s'étendant radialement, les premier et second flancs étant décalés axialement l'un de l'autre et reliés l'un à l'autre par des parties de liaison s'étendant axialement.

Le flasque de chaque arbre peut être monté sur le premier flanc du porte-satellites, la partie cylindrique radialement interne de chaque arbre étant montée sur le second flanc du porte-satellites.

Le premier planétaire peut être situé radialement à l'intérieur des satellites, le second planétaire étant situé radialement à l'extérieur des satellites.

Le premier planétaire, le second planétaire et les satellites peuvent comporter chacun une première denture annulaire et une seconde denture annulaire, décalées axialement l'une de l'autre, la première denture de chaque satellite engrenant avec la première denture du premier planétaire et avec la première denture du second planétaire, la seconde denture de chaque satellite engrenant avec la seconde denture du premier planétaire et avec la seconde denture du second planétaire.

Le planétaire externe peut comporter une première bague portant la première denture et une seconde bague portant la seconde denture.

Le porte-satellites peut être réalisé dans le même matériau que les arbres ou dans deux matériaux différents.

Le porte-satellites et les arbres sont par exemple réalisés en acier ou en titane.

Le train planétaire peut comporter un capot dans lequel sont logés, au moins en partie, le porte-satellites, les satellites et les arbres.

Le capot peut comporter une première partie annulaire et une seconde partie annulaire, délimitant ledit volume.

Le planétaire interne et le planétaire externe sont destinés à pivoter et le porte-satellites ainsi que les arbres sont destinés à être maintenus fixes en fonctionnement.

Le planétaire interne peut également être appelé solaire. Le planétaire externe peut également être appelé couronne.

La partie cylindrique radialement interne et la partie cylindrique radialement externe peuvent être tubulaires, l'épaisseur de la partie cylindrique radialement interne étant inférieure à l'épaisseur de la partie cylindrique radialement externe.

Soit kc la constante de raideur du porte-satellites et soit kp la constante de raideur de chaque arbre, le porte-satellites et les arbres peuvent être dimensionnés de telle façon que 0,5.kc<kp<2kc. Les définitions des constantes de raideur sont données ci-après.

L'invention peut également concerner une turbomachine, telle par exemple qu'un turboréacteur ou un turbopropulseur d'avion, comportant un train planétaire du type précité.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue éclatée, en perspective, d'un train planétaire selon une forme de réalisation de l'invention ;
- la figure 2 est une vue en coupe axiale du train planétaire ;
- la figure 3 est une vue de détail d'une partie de la figure 2 ;
- la figure 4 est une vue en perspective d'un arbre de satellite ;
- la figure 5 illustre schématiquement la déformation du premier flanc du porte-satellites lorsqu'un effort fc est appliqué au niveau des bords des ouvertures du premier flanc ;
- la figure 6 illustre schématiquement la déformation kp d'un arbre lorsqu'un effort fp est appliqué sur l'arbre.

### DESCRIPTION DETAILLEE

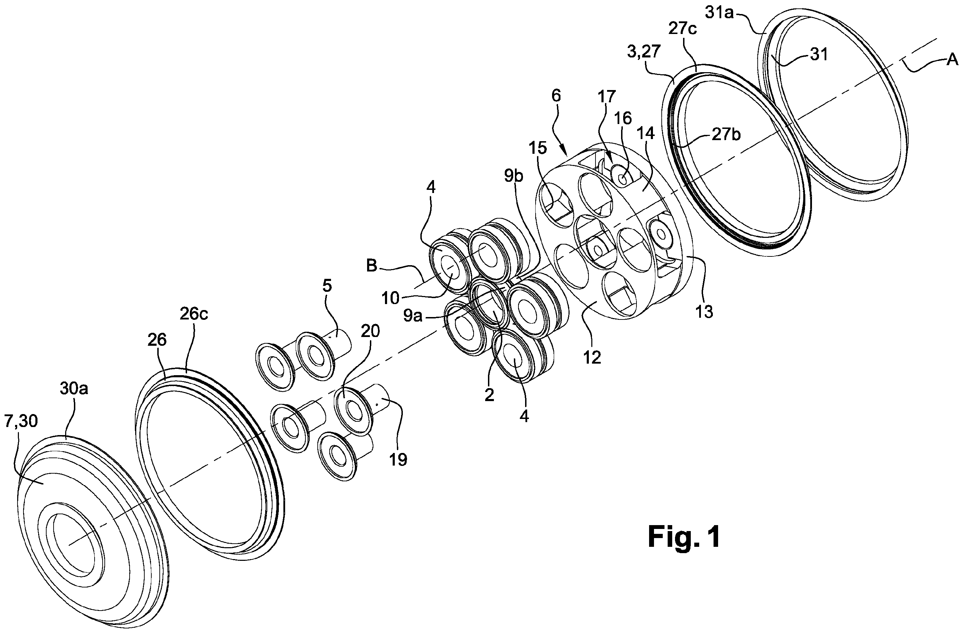

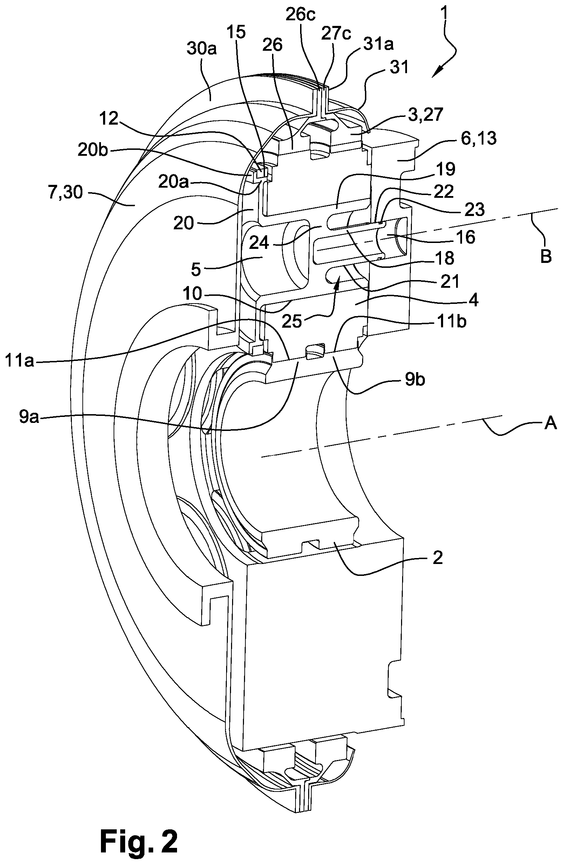

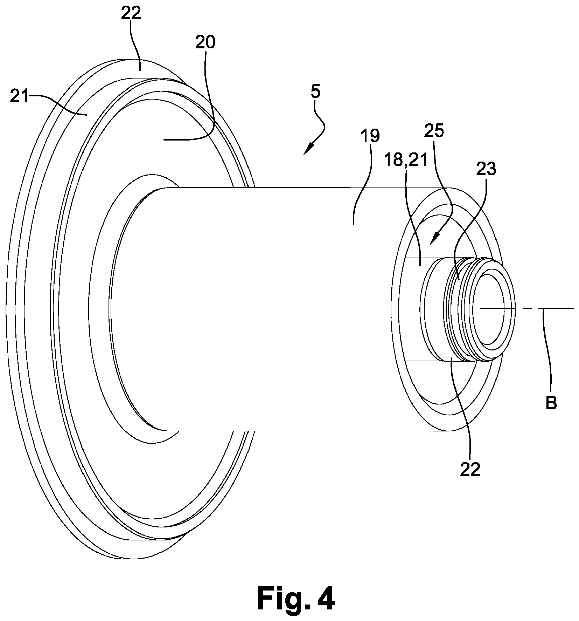

Les figures 1 à 4 illustrent un train planétaire 1 selon une forme de réalisation de l'invention. Celui-ci comporte un planétaire interne 2 ou solaire, un planétaire externe 3 ou couronne, des satellites 4 montés pivotants autour d'arbres 5 et un porte-satellites 6 sur lequel sont montés les arbres 5 des satellites 6. Le train planétaire 1 comporte en outre un capot 7 ou porte-couronne.

Le planétaire interne 2 est annulaire d'axe A et comporte une première denture 9a et une seconde denture 9b annulaires et radialement externes, décalées axialement l'une de l'autre.

Chaque satellite 4 est annulaire et comporte une surface radialement interne cylindrique 10. Chaque satellite 4 comporte en outre une première denture 11a et une seconde denture 11b annulaires radialement externes, décalées axialement l'une de l'autre, engrenant respectivement avec les première et seconde dentures 9a, 9b du planétaire interne 2.

Le porte-satellites 6 comporte un premier flanc annulaire 12 et un second flanc annulaire 13 décalés axialement l'un de l'autre et reliés par des parties de liaison 14 s'étendant axialement. Le premier flanc 12 comporte des ouvertures circulaires 15 d'axes B. Le second flanc 13 comporte des trous 16 d'axes B, situés axialement en regard des ouvertures circulaires 15 du premier flanc. Les parties de liaison 14 délimitent des logements 17 servant au montage des satellites 4. Lesdits logements 17 débouchent radialement vers l'extérieur de manière à permettre le montage radial des satellites 4 dans lesdits logements 17 du porte-satellites 6.

Chaque arbre 5 s'étend suivant l'axe B correspondant et comporte une partie cylindrique radialement interne 18, une partie cylindrique radialement externe 19 autour de laquelle le satellite 4 est monté pivotant et un flasque 20 s'étendant radialement depuis la partie cylindrique radialement externe 19. La périphérie radialement externe du flasque 20 comporte un rebord cylindrique 20a dont une extrémité, dite extrémité avant, est prolongée par un rebord radial 20b, de manière à présenter une section en forme générale de L. La surface externe du rebord cylindrique 20a est montée sans jeu ou avec un jeu faible dans l'ouverture 15 du premier flanc 12 du porte-satellites 6. Le rebord radial 20b est en appui axial sur la face radiale avant du premier flanc 12.

Ladite partie cylindrique interne 18 comporte plus particulièrement une première zone 21 ou zone avant, de plus faible diamètre qu'une seconde zone 22 ou zone arrière. La zone arrière 22 est montée sans jeu ou avec un jeu faible dans le trou 16 du second flanc 13 du porte-satellites 6. La seconde zone 22 comporte une gorge annulaire 23 au niveau de sa surface radialement externe.

Le diamètre externe de ladite seconde zone 22 est noté d0. L'épaisseur de la première zone 21, c'est-à-dire la distance radiale entre la surface interne et la surface externe de la première zone 21, est notée e0. Le diamètre externe de la première zone 21 est noté d3. Les dimensions de la première zone 21 sont définies pour offrir de la souplesse au niveau de ladite première zone 21.

Le diamètre externe de la partie cylindrique radialement externe 19 est noté d1. L'épaisseur de la partie cylindrique radialement externe 19, c'est-à-dire la distance radiale entre la surface externe et la surface interne, est notée e1.

La largeur de la partie annulaire radiale 20 du flasque, c'est-à-dire la dimension axiale de ladite partie annulaire radiale 20, est notée l2. Le diamètre externe du rebord 20a est noté d4. La largeur l2 est définie pour offrir de la souplesse au niveau du flasque 20.

La partie cylindrique radialement externe 19 et la partie cylindrique radialement interne 18 sont reliées l'une à l'autre par une zone de liaison 24 annulaire s'étendant radialement. Plus particulièrement, la zone de liaison 24 relie une extrémité, en particulier l'extrémité avant, de la partie cylindrique interne 18, et une zone médiane de la partie cylindrique externe 19. Un espace annulaire 25 est délimité entre la partie cylindrique radialement interne 18 et la partie cylindrique radialement externe 19. La plus faible largeur de la zone de liaison 24, c'est-à-dire la plus faible distance axiale de la zone de liaison 24, est notée l3.

Les dimensions d0, d1, d3 et d4 sont définies telles que d3<d0<d1 <d4. Par ailleurs, les dimensions e0 et e1 sont définies telles que e0 ≤e1.

Les arbres 5 et le porte-satellites 6 sont par exemple réalisés en acier ou en titane.

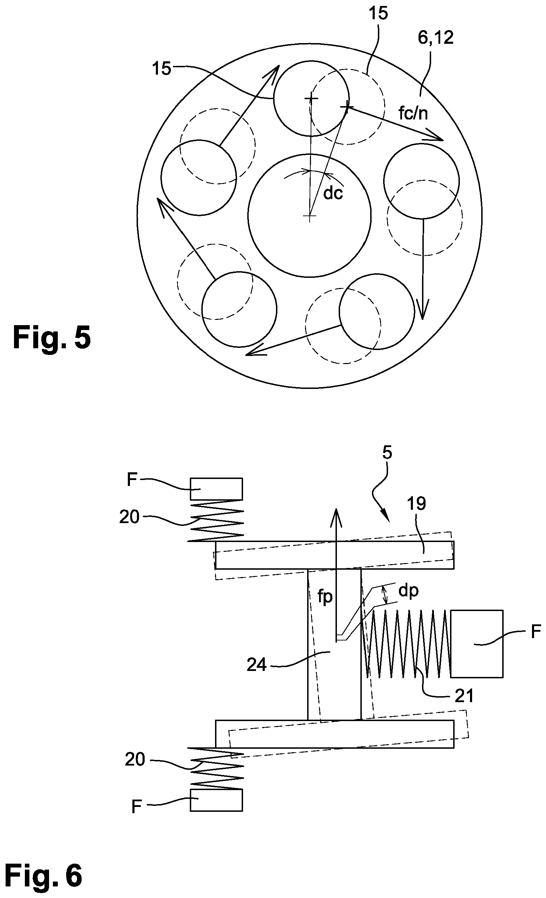

La figure 5 illustre schématiquement la déformation dc du premier flanc 12 du porte-satellites 6 lorsqu'un effort fc est appliqué au niveau des bords des ouvertures 15 et que le second flanc 13 est défini comme étant fixe. Pour un nombre n d'ouvertures 12, la valeur de l'effort appliqué à chaque ouverture 12 est égale à fc/n, les efforts étant régulièrement répartis sur les différentes ouvertures 12. Cet effort fc engendre un déplacement dc de chaque ouverture 12. Après déplacement, les ouvertures 12 sont illustrées en traits pointillés. On définit la constante de raideur kc du porte-satellites 6 par l'équation kc = fc /dc.

La figure 6 illustre schématiquement la déformation dp d'un arbre 5 lorsqu'un effort fp est appliqué sur l'arbre et que la périphérie externe du flasque 20 ainsi que la seconde zone 22 de la partie interne 18 sont considérées comme fixes. Le flasque 20 et la première zone 21 de la partie interne 18 sont représentés comme des ressorts, compte tenu de leur flexibilité ou de leur souplesse. Les parties en traits pointillés illustrent lesdites parties après déformation. On définit la constante de raideur kp de l'arbre 5 par l'équation kp = fp /dp.

Il a été calculé que les différentes parties du porte-satellites 6 et des arbres 5 doivent être dimensionnées de telle manière que 0,5.kc<kp<2kc, pour que les désalignement des arbres 5 soient considérés comme acceptables.

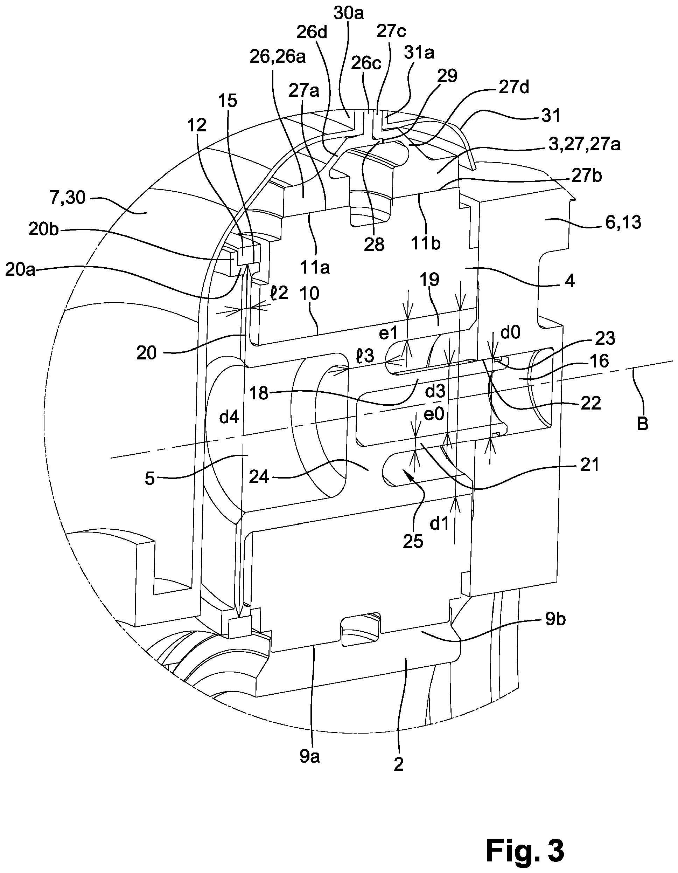

Le planétaire externe 3 comporte une première bague 26 et une seconde bague 27 décalées axialement l'une de l'autre. Comme cela est mieux visible à la figure 3, chaque bague 26, 27 comporte une partie annulaire radialement interne 26a, 27a portant une denture radialement interne 26b, 27b. La première bague 26 porte une première denture 26a engrenant avec la première denture 11a de chaque satellite 4. La seconde bague 27 porte une seconde denture 27b engrenant avec la seconde denture 11b de chaque satellite 4. Chaque bague 26, 27 comporte en outre une bride radialement externe 26c, 27c s'étendant radialement. Chaque bague 26, 27 comporte enfin une paroi de liaison oblique 26d, 27d reliant la bride externe 26c, 27c et la partie annulaire interne 26a, 27a. La paroi de liaison 26d de la première bague 26 s'évase en direction de la seconde bague 27. La paroi de liaison 27d de la seconde bague 27 s'évase en direction de la première bague 26. La périphérie radialement interne de la bride 26c de la première bague 26 comporte un rebord annulaire de centrage 28 engagé dans un décrochement 29 de forme correspondante de la bride 27c de la seconde bague 27. Les deux brides 26c, 27c sont en appui axial l'une sur l'autre. Le capot 7 est fixé sur les brides 26c, 27c des première et seconde bagues 26, 27. Le capot 7 comporte une première partie 30 ou partie avant et une seconde partie 31 ou partie arrière, chaque partie 30, 31 comportant une bride annulaire radiale 30a, 31a en périphérie radialement externe. Les brides 30a, 31a des parties 30, 31 du capot 7 sont fixées axialement de part et d'autre des brides 26c, 27c des bagues, par exemple par soudage ou boulonnage. Les première et seconde parties 30, 31 du capot 7 délimitent un volume interne annulaire logeant, au moins en partie, les satellites 4, les arbres 5 et le porte-satellites 6.

En fonctionnement, le train planétaire 1 selon l'invention peut permettre de transmettre un couple important ce qui peut avoir pour effet de déformer légèrement le porte-satellites 6, en particulier au niveau du second flanc 13. La structure des arbres 5 autorise leur déformation, au niveau du flasque 20, des parties cylindriques 18, 19 ou de la zone de liaison 24, de manière à compenser les déformations du porte-satellites 6. On maintient ainsi de bonnes performances des engrènements entre les satellites 4 et les planétaires 2, 3 tout en évitant une usure prématurée des dentures 9a, 9b, 11a, 11b, 27a, 27b.

## Revendications

1. Train planétaire (1) comportant :
- un premier planétaire (2),
- un second planétaire (3),
- des arbres (5),
- des satellites (4) engrenant avec le premier planétaire (2) et avec le second planétaire (3), chaque satellite (4) étant monté pivotant autour d'un desdits arbres (5),
- un porte-satellites (6) supportant chaque arbre (5), chaque arbre (5) s'étendant suivant un axe (B) et comportant une partie cylindrique radialement interne (18) montée sur le porte-satellites (6), une partie cylindrique radialement externe (19) autour de laquelle le satellite (4) est monté pivotant la partie cylindrique radialement externe (19) et la partie cylindrique radialement interne (18) étant reliées l'une à l'autre par une zone de liaison (24) s'étendant radialement, **caractérisé en ce que** chaque arbre (5) comporte un flasque (20) s'étendant radialement depuis la partie cylindrique radialement externe, la périphérie radialement externe du flasque (20) étant montée sur le porte-satellites.

2. Train planétaire (1) selon la revendication 1, **caractérisé en ce que** le porte-satellites (6) comporte un premier flanc annulaire (12) s'étendant radialement et un second flanc annulaire (13) s'étendant radialement, les premier et second flancs (12, 13) étant décalés axialement l'un de l'autre et reliés l'un à l'autre par des parties de liaison (14) s'étendant axialement.

3. Train planétaire (1) selon la revendication 2, **caractérisé en ce que** le flasque (20) de chaque arbre (5) est monté sur le premier flanc (12) du porte-satellites (6), la partie cylindrique radialement interne (18) de chaque arbre (5) étant montée sur le second flanc (13) du porte-satellites (6).

4. Train planétaire (1) selon l'une des revendications 1 à 3, **caractérisé en ce que** le premier planétaire (2) est situé radialement à l'intérieur des satellites (4), le second planétaire (3) étant situé radialement à l'extérieur des satellites (4).

5. Train planétaire (1) selon l'une des revendications 1 à 4, **caractérisé en ce que** le premier planétaire (2), le second planétaire (3) et les satellites (4) comportent chacun une première denture annulaire (9a, 1 1a, 27a) et une seconde denture annulaire (9b, 11b, 27b), décalées axialement l'une de l'autre, la première denture (11a) de chaque satellite (4) engrenant avec la première denture (9a) du premier planétaire (2) et avec la première denture (27a) du second planétaire (3), la seconde denture (11b) de chaque satellite (4) engrenant avec la seconde denture (9b) du premier planétaire (2) et avec la seconde denture (27b) du second planétaire (3).

6. Train planétaire (1) selon l'une des revendications 1 à 5, **caractérisé en ce que** le porte-satellites (6) est réalisé dans le même matériau que les arbres (5).

7. Train planétaire (1) selon l'une des revendications 1 à 6, **caractérisé en ce que** la partie cylindrique radialement interne (18) et la partie cylindrique radialement externe (19) sont tubulaires, l'épaisseur (e0) de la partie cylindrique radialement interne (18) étant inférieure à l'épaisseur (e1) de la partie cylindrique radialement externe (19).

8. Train planétaire (1) selon l'une des revendications 1 à 7, **caractérisé en ce que**, soit kc la constante de raideur du porte-satellites (6) et soit kp la constante de raideur de chaque arbre, le porte-satellites (6) et les arbres (5) sont dimensionnés de telle façon que 0,5.kc<kp<2kc.

## Patentansprüche

1. Planetengetriebe (1), das folgendes umfasst:
- ein erstes Sonnenrad (2),
- ein zweites Sonnenrad (3),
- Wellen (5).
- Planetenräder (4), die mit dem ersten Sonnenrad (2) und dem zweiten Sonnenrad (3) in Eingriff stehen, wobei jedes Planetenrad (4) um eine der Wellen (5) drehbar montiert ist,
- einen Planetenträger (6), der jede Welle (5) trägt, wobei sich jede Welle (5) entlang einer Achse (B) erstreckt und einen radial inneren zylindrischen Teil (18) umfasst, der auf dem Planetenträger (6) montiert ist, und einen radial äußeren zylindrischen Teil (19), um den der Planetenträger (4) drehbar montiert ist, wobei der radial äußere zylindrische Teil (19) und der radial innere zylindrische Teil (18) durch einen radial verlaufenden Verbindungsbereich (24) miteinander verbunden sind, **dadurch gekennzeichnet, dass** jede Welle (5) einen Flansch (20) umfasst, der von dem radial äußeren zylindrischen Teil aus radial verläuft, wobei der radial äußere Umfang des Flansches (20) auf dem Planetenträger montiert ist.

2. Planetengetriebe (1) nach Anspruch 1, **dadurch gekennzeichnet, dass** der Planetenträger (6) eine erste, radial verlaufende Ringflanke (12) und eine zweite, radial verlaufende Ringflanke (13) umfasst, wobei die erste und die zweite Flanke (12, 13) axial zueinander versetzt und durch axial verlaufende Verbindungsabschnitte (14) miteinander verbunden sind.

3. Planetengetriebe (1) nach Anspruch 2, **dadurch gekennzeichnet, dass** der Flansch (20) jeder Welle (5) auf die erste Flanke (12) des Planetenträgers (6) montiert ist, während der radial innere zylindrische Teil (18) jeder Welle (5) auf die zweite Flanke (13) des Planetenträgers (6) montiert ist.

4. Planetengetriebe (1) nach einem der Ansprüche 1 bis 3, **dadurch gekennzeichnet, dass** das erste Sonnenrad (2) radial innerhalb der Planetenräder (4) angeordnet ist, während das zweite Sonnenrad (3) radial außerhalb der Planetenräder (4) angeordnet ist.

5. Planetengetriebe (1) nach einem der Ansprüche 1 bis 4, **dadurch gekennzeichnet, dass** das erste Sonnenrad (2), das zweite Sonnenrad (3) und die Planetenräder (4) jeweils eine erste Ringverzahnung (9a, 11a, 27a) und eine zweite Ringverzahnung (9b, 11b, 27b) umfassen, die axial zueinander versetzt sind, wobei die erste Verzahnung (11a) jedes Planetenrades (4) mit der ersten Verzahnung (9a) des ersten Sonnenrades (2) und mit der ersten Verzahnung (27a) des zweiten Sonnenrades (3) im Eingriff steht, und die zweite Verzahnung (11b) jedes Planetenrades (4) mit der zweiten Verzahnung (9b) des ersten Sonnenrades (2) und mit der zweiten Verzahnung (27b) des zweiten Sonnenrades (3) im Eingriff steht.

6. Planetengetriebe (1) nach einem der Ansprüche 1 bis 5, **dadurch gekennzeichnet, dass** der Planetenträger (6) aus dem gleichen Material wie die Wellen (5) hergestellt ist.

7. Planetengetriebe (1) nach einem der Ansprüche 1 bis 6, **dadurch gekennzeichnet, dass** der radial innere zylindrische Teil (18) und der radial äußere zylindrische Teil (19) rohrförmig sind, wobei die Dicke (e0) des radial inneren zylindrischen Teils (18) geringer ist als die Dicke (e1) des radial äußeren zylindrischen Teils (19).

8. Planetengetriebe (1) nach einem der Ansprüche 1 bis 7, **dadurch gekennzeichnet, dass** kc die Federkonstante des Planetenträgers (6) und kp die Federkonstante jeder Welle ist, wobei der Planetenträger (6) und die Wellen (5) so bemessen sind, dass 0,5.kc<kp<2kc ist.

## Claims

1. Planetary gearset (1) comprising:
- a first planet gear (2),
- a second planet gear (3),
- pinion gears (4) meshing with the first planet gear (2) and the second planet gear (3), each pinion gear (4) being pivotally mounted around a shaft (5),
- a pinion gear carrier (6) supporting each shaft (5), **characterised in that** each shaft (5) extends along an axis and comprises a radially inner cylindrical portion (18) mounted on the pinion gear carrier (6), a radially outer cylindrical portion (19) about which the pinion gear (4) is pivotally mounted and a flange (20) extending radially from the radially outer cylindrical portion (19), the radially outer periphery of the flange (20) being mounted on the pinion gear carrier (6), the radially outer cylindrical portion (19) and the radially inner cylindrical portion (18) being connected to each other by a radially extending connecting zone (24).

2. Planetary gearset (1) according to claim 1, **characterized in that** the pinion gear carrier (6) has a first radially extending annular flange (12) and a second radially extending annular flange (13), the first and second flanges (12, 13) being axially offset from each other and connected to each other by axially extending connecting parts (14).

3. Planetary gearset (1) according to claim 2, **characterized in that** the flange (20) of each shaft (5) is mounted on the first flank (12) of the pinion gear carrier (6), the radially inner cylindrical part (18) of each shaft (5) being mounted on the second flank (13) of the pinion gear carrier (6).

4. Planetary gearset (1) according to claims 1 to 3, **characterized in that** the first planet gear (2) is located radially inside pinion gears (4), the second planet gear (3) being located radially outside of the pinion gears (4).

5. Planetary gearset (1) according to one of claims 1 to 4, **characterised in that** the first planet gear (2), the second planet gear (3) and the pinion gears (4) each have a first annular toothing (9a, 11a, 27a) and a second annular toothing (9b, 11b, 27b), which are axially offset from one another, the first toothing (11a) of each pinion gear (4) meshing with the first toothing (9a) of the first planet gear (2) and with the first toothing (27a) of the second planet gear (3), the second toothing (11b) of each pinion gear (4) meshing with the second toothing (9b) of the first planet gear (2) and with the second toothing (27b) of the second planet gear (3).

6. Planetary gearset (1) according to one of claims 1 to 5, **characterized in that** the pinion gear carrier (6) is made in the same material as the shafts (5).

7. Planetary gearset (1) according to one of claims 1 to 6, **characterized in that** the radially inner cylindrical portion (18) and the radially outer cylindrical portion (19) are tubular, the thickness (e0) of the radially inner cylindrical portion (18) being less than the thickness (e1) of the radially outer cylindrical portion (19).

8. Planetary gearset (1) according to one of claims 1 to 7, **characterized in that** either kc the stiffness constant of the pinion gear carrier (6) or kp the stiffness constant of each shaft, the pinion gear carrier (6) and the shafts (5) are dimensioned in such a way that 0.5 kc<kp<2kc.
